# EUROPEAN PATENT SPECIFICATION

(11) **EP 1 238 790 B1**
(45) Date of publication and mention of the grant of the patent: **06.06.2007**
(21) Application number: 02005455.7
(22) Date of filing: 08.03.2002
(51) Int. Cl.: B29D 31/518, A43B 7/14, A43B 7/22, A43B 13/12

(54) **Midsole with support element**
Mittelsohle mit Stützelemente
Semelle intermédiaire avec élément de support

(30) Priority: 08.03.2001 DE 10111229
(43) Date of publication of application: 11.09.2002
(73) Proprietor: adidas International Marketing B.V., 1062 KR Amsterdam (NL)
(72) Inventor: Knoerr, Klaus, 91315 Höchstadt (DE)
(74) Representative: Hess, Peter K. G.

(56) References cited:
- EP-A- 1 116 448
- FR-A- 2 488 829
- US-A- 5 318 645
- US-A- 6 026 599

## Description

### 1. Technical field

The present invention relates to a sole for shoes, in particular a midsole with a support element for athletic shoes, wherein the midsole and the support element are made of the same material. Furthermore, the present invention relates to a method for the manufacture of this sole.

### 2. Prior art

Known soles substantially have a three layered structure. They consist of an outsole, a midsole and an inner sole. The outsole provides the shoe with an outer profile so that it meets the requirements of good grip with the respective ground. Furthermore, the outsole is made of a non-abrasive material to assure high wear resistance and a long lifetime of the sole. The midsole is often made of a foamed plastic as for example elastomers with different densities. Based on the ability of the midsole materail to deform reversibly, it absorbs or dampens mechanical impacts which are generated during the running motion and which are transmitted to the body of the runner via the shoe. The damping of said mechanical impacts induced in this way can be supported by the integration of damping elements of different construction. Additionally, the midsole often serves for receiving stability or support elements which are made of lightweight and stable plastics and which support the foot during running. Based on their selectively adjustable flexibility, a further function of this stability or support element is the support of the running motion of the runner. An example of such a known support element is described in DE-A-199 04 744.

The connection of the above referenced parts of a sole, the midsole and the support element, can be realized with different methods known from the prior art.

In this context, conventional methods comprise stitching, sewing and cementing. In a sole construction of athletic shoes, the different layers are conventionally connected by means of adhesive which has several disadvantages. Based on their constitution, presently used adhesives are often volatile and harmful to the environment because of the emission of certain gases. Additionally, the known adhesives do not form a favorable bond for example between rubber and plastic sole elements so that no durable connection is achieved and said elements become detached from one another. It is a further disadvantage that the weight of the shoe is increased by the use of adhesives. Additionally, the alignment of the sole components to each other is an expensive process. In the case that the sole components are not optimally aligned, the shoe is uncomfortable and does not meet the expected requirements.

FR-A-2 488 829 and US-A-6,026,599 disclose further sole bodies.

According to the prior art, a rubber outsole and a foamed midsole are connected together by using two different methods. According to the teaching of US-A-4 816 345, both elements are connected by heating while contacting each other wherein this connection is not realized by a vulcanization process. Thermoplastic polymers and rubber are connected by co-vulcanization according to US-A-4 921 762 wherein peroxidic vulcanization agents and vulcanization activators are added to the rubber. Further methods are known for connecting together the outsole and the midsole by vulcanization. In this context, it is yet important to note that the respectively used plastic and rubber have to be supplemented by chemical additives in the preliminary stage of the method in order to later achieve a good connection. These additives are also indicated as bonding agents which are expensive as basic material. Additionally, corresponding costly machines are necessary to process the basic materials and the different additives. Based on the number of necessary procedural steps only for mixing the materials, the whole sole manufacture is expensive and time-consuming.

It is therefore the problem of the present invention to provide a method for connecting together sole elements which is less expensive and less time-consuming than conventional prior art methods. It is a further problem of the present invention to provide a low-cost sole which comprises additional support elements in the midsole region and to provide a shoe with such a sole.

### 3. Summary of the invention

The invention is defined in the independent claims 1, 6, and 12.

In one embodiment, the present invention relates to a method for the manufacture of a sole element, particularly for athletic shoes, comprising the following steps: manufacture of a sole preform and a preform of a support element wherein said sole preform and said preform of the support element are made from the same polymer base having different mechanical properties and do not comprise any connecting means; positioning of the sole preform and the preform of the support element in a mold; and connecting together said sole preform with said preform of said support element under the application of heat and pressure without adding connecting means.

For the manufacture of a sole element, the different preforms are made from the same polymer-base. The manufacture of the preforms is performed by pre-vulcanization wherein cross-linking agents contained in the material are not completely vulcanized. As a result of the use of preforms with the same polymer base and due to the remaining cross-linking agents, cross-linking and, thus, a connection between the preforms is performed when heat and pressure are applied. To this end, no connecting means have to be added during the whole procedure so that both the materials used and the number of procedural steps are reduced compared to conventional methods.

Preferably according to the invention, the sole preform as well as the preform of the support element are made of standard EVA.

Furthermore, the present invention relates to a sole element, particularly for athletic shoes, comprising a sole with at least one support element, wherein the sole and the support element are made from the same polymer base having different mechanical properties and being connected to each other without connecting means.

The components of the sole element according to the invention are made from the same polymer base. According to the invention, the single components are connected to each other without using connecting means whereby a sole element having the same functional properties as conventional sole elements can be produced more cost effectively.

In addition, the present invention relates to a shoe with a sole manufactured according to the present invention.

### 4. Detailed description of the invention

The present invention provides a method for the manufacture of sole elements where, in particular, the low cost and reduction in the amount of materials used is of primary importance.

As already explained in the introductory part of the specification, the sole of athletic shoes consist of an outsole, a midsole and an inner sole which are also indicated as sole elements. The midsole is often supplemented by additional support elements wherein the midsole is mostly made of damping plastics. Within the scope of the present invention, the midsole is preferably made of standard-EVA (ethylene vinyl acetate). The standard-EVA is made based on a vinyl-acetate(VA)-content of 18-25 %. Further fillers as for example SiO₂ or TiO₂ as well as cross-linking agents and processing promoters are added to said standard-EVA. The cross-linking agents comprise for example peroxides. Additionally, co-agents are added to the material-mixture hardening the material during vulcanization. Such co-agents are for example acrylates or isocyanates. Depending on whether the EVA is to be foamed later, blowing agents are also added to the material mixture.

Said support elements are made of plastics having high mechanical stability compared to the properties of the midsole materials, as for example Pebax®, a nylon-modification or TPU, a thermoplastic elastomer based on polyurethane. In accordance with the invention, the support elements are also preferably made of standard-EVA wherein different mechanical properties compared to the standard-EVA of the midsole are achieved based on the degree of cross-linking of the contained macromolecular substances. Although, the method according to the present invention is explained on the basis of a midsole, it is also conceivable to use the method for the manufacture of other sole elements and to thereby exploit its advantages.

Within the limits of the method according to the present invention, the midsole and the support elements are preferably pre-manufactured as preforms. The manufacture of the preforms also serves to pre-adjust the different mechanical properties of the resulting midsole and the resulting support elements. The manufacture of the preforms of the support element and the midsole is carried out using standard-EVA material so that the midsole as well as the support elements are made from the same polymer-bas. Thus, the support element and the midsole are equal with respect to their polymer base but they do not correspond with respect to their structure. The material-mixture is only supplemented by the addition of blowing agents, peroxides and fillers. Di-comyl-peroxide is used for example as a peroxide and silicic acid is for example used as a filler. The added peroxides serve to cross-link the polymer-base. It follows therefrom that the preforms of the midsole and the support element can differ in their mechanical properties.

Starting from the same polymer base (a standard-EVA), the preforms of the midsole and the support element are manufactured according to different production methods in order to achieve the different mechanical properties, although both methods use pre-vulcanization.

The midsole preferably consists of standard-EVA having vinyl acetate content of 18 to 27 % wherein additionally the above mentioned filler and peroxides are added. Moreover, a blowing agent is supplemented so that the midsole preform can be shaped later. The above composition is pre-vulcanized for adjustment of the mechanical properties of the midsole preform and for the provision of the shape. The pre-vulcanization is usually carried out at temperatures of 155-170 °C. Compared to the conventional vulcanization, the difference is a shortened time-period. As a result of the pre-vulcanization, a certain degree of cross-linking in the standard-EVA is achieved and the mechanical properties of the midsole preform are adjusted.

The preform of the support element is also according to the invention preferably made of standard-EVA having a vinyl acetate content of 18 to 25 %. It is, thus, also made from the same polymer-base. Peroxides and fillers are added as additives as already mentioned above. Additionally, co-agents are added to the material-mixture hardening the material during vulcanization. Acrylates or isocyanates are examples of such co-agents. In comparison to the material of the midsole preform, no blowing agent is supplemented to the standard-EVA. In the course of the pre-vulcanization process, the basic material is formed into preforms of the support elements. Compared to the midsole preform, a higher degree of cross-linking is attained to achieve certain mechanical properties. These mechanical properties include a higher stiffness and hardness compared to the midsole preform. For example, according to the invention it is preferred to obtain a hardness of Shore A 80-95. By the addition of further additives, as for example di- or trimodal acrylate, it is possible to produce the support elements having a hardness in the range of Shore D. In this context, the hardness of Shore is determined corresponding to the ISO-standard 868-1985 or the DIN-standard 53505.

These mechanical properties correspond to the hardness values of Pebax® and TPU which so far were used for the manufacture of known support elements.

Since these materials are expensive and cannot be processed optimally in view of their outer fashion and incorporation in the sole, it is a further advantage of this invention that on the one hand further expenses are saved and on the other hand better results in the processing are achieved by the use of standard-EVA as will be described later. During the manufacture of the preforms of the support elements, the same are pre-vulcanized and subsequently cut into pieces. The preform shape can vary according to the function of the support element. For example elongated structures or V-shaped structures are possible which support the flexibility of the sole by their configuration. Furthermore, support elements having a comparably greater volume can also be produced and positioned adjacent the medial or lateral side of the sole to correctively support possible defects in the bone structure of the foot.

Based on the surface quality of the produced preforms of the support elements made of standard-EVA, it is possible to fashion the same as desired and without great expense by means of a silk screen printing procedure. In so doing, it is possible to adapt the coloured surface design of these portions of the sole to the upper and the whole sole of the resulting shoe. Thus, the application of aesthetic designs to these preforms is preferably carried out according to the invention preferably after the manufacture of the preform of the support element and by means of silk screen printing. In contrast thereto, the films or foils used in the past for fashioning the TPU-elements were applied with high technical efforts and they were expensive to manufacture.

After the preforms of the support element and the midsole have been produced from the same polymer-base, they are arranged in a mold which determines the resulting sole shape by its inner shape. In this process, the preforms of the support elements are according to the invention preferably positioned on the lower side of the mold and subsequently the midsole preform is arranged over the top. After closing the mold, heat and pressure are applied to the contained preforms within the mold. By this energy supply, a further shaping, a connecting between the midsole preform and the preform of the support element as well as a hardening of the preform of the support element is provided. Generally, this process of connecting is indicated as co-vulcanization in which a cross-linking between the standard-EVA of the midsole and the support element is carried out. The co-vulcanization is performed at temperatures of approximately 155-170°C. In this context, it is important to note that the connection between the midsole and the support elements results from the peroxides existing in the material. These peroxides were not completely vulcanized during the step of pre-vulcanization for the manufacture of the sole preform and the preform of the support element. Therefore, the sole and the support element are connected without adding connecting means. In this context, adhesives or generally the addition of reactive functional groups to the polymer base are considered to be connecting means enabling a connection between the support element and the sole. Connecting means also comprise mechanical fastening means for providing a connection. In contrast, peroxides are cross-linking agents; the vulcanization of the polymer-base is not possible without them.

After closing the mold, the above mentioned blowing agent contained in the midsole preform is activated by the energy supply. The midsole preform is foamed and thereby enlarges its volume whereby it is pressed in the predetermined desired shape of the sole element and a midsole is formed. At the same time, the midsole preform and the preform of the support element are permanently connected to each other with low technical efforts by the energy supply. Furthermore, the preform of the support element is hardened during this process without substantially changing its shape and finally it forms a support element. The substantial advantage of this process consists in the fact that a permanent connection between the midsole and the support element is provided without adding connecting means to the basic material of the midsole preform and the preform of the support element. Additionally, no connecting means have to be supplemented in the co-vulcanization process. For this reason, the material used is less expensive and the whole manufacturing method requires less procedural steps. Thus, a midsole with support element is preferably produced according to the invention completely from standard-EVA wherein the support element is only connected to the midsole by the application of pressure and heat.

After the manufacture of the midsole with support element according to the invention, the outsole, the inner sole and the upper is connected by conventional methods so that the shoe according to the invention is provided.

The above described manufacturing process has substantial advantages with respect to known methods. On the one hand, it is not necessary to connect the support element with the midsole by means of adhesive. In this manner, a previous shaping of the midsole having an exact fit to the support element is no longer necessary. Furthermore, it is prevented that the midsole and the support element are wrongly positioned with respect to each other during cementing them together. Additionally, renouncing the use of adhesive leads to a reduced impact on the environment which is of increasing importance today. The use of adhesive also results in a loss of flexibility in the resulting sole due to the curing of the adhesive. This disadvantage is overcome by the present invention. Additionally it should be noted that the possibility of an exact fit of the support element to the midsole naturally follows from the method according to the invention. Moreover, several procedural steps are no longer necessary to position the support element on the midsole and to apply the adhesive. Further, only one mold is necessary for this process in which the midsole is at the same time shaped and connected to the support element. The manufacture of the sole element and the whole shoe according to the invention is, thus, less expensive and requires less time as a result of the reduced number of procedural steps while, at the same time, it can be executed more easily and is more environmentally friendly compared to known methods. A further cost reduction is also achieved by the use of a standard-EVA material for the support element since the materials traditionally used until now to manufacture support elements are comparably more expensive as for example TPU or Pebax®.

Besides the advantages of the process, a substantial advantage also results with respect to the comfort of the shoe according to the invention. As a result of using standard-EVA for the manufacture of the preforms of the midsole and the support element, the mechanical properties of the midsole and the support element can be adjusted as desired. In contrast thereto, even the support elements made of Pebax® or TPU were not variable in their mechanical properties and in addition were stiff and inflexible. Especially with respect to children's shoes, this fact is of great importance since a lower force is available to deform the sole due to the lower weight of children. Thus, it is advantageous in this case to produce a sole with a high degree of flexibility resulting from a suitable material adjustment.

## Claims

1. A method for the manufacture of a sole element, particularly for athletic shoes, comprising the following steps:
a. manufacture of a sole pre-form and a pre-form of a support element, wherein said sole pre-form and said pre-form of the support element are made from the same polymer base having different mechanical properties and do not comprise any connecting means, *and wherein the polymer base comprises cross-linking agents;*
b. positioning of the sole pre-form and the pre-form of the support element in a mold; and
c. connecting of said sole pre-form with said pre-form of said support element under application of heat and pressure without adding connecting means, **characterized in that**:
d. the sole pre-form and pre-form of the support element are pre-vulcanized.

2. Method according to claim 1, wherein said sole preform and said preform of the support element are made of standard-EVA.

3. Method according to claim 2, wherein said preform of the support element comprises a vinyl acetate content of 18 to 25% and peroxides.

4. Method according to claim 2, wherein the sole preform comprises a vinyl acetate content of 18 to 27%, fillers, peroxides and co-agents like acrylate and isocyanate.

5. Method according to claim 4, wherein the sole preform comprises a blowing agent for foaming said sole preform in a mold.

6. A sole element, particularly for athletic shoes, comprising:
a. a sole with at least one support element, wherein
b. the sole and the support element are made from the same polymer base having different mechanical properties and being connected to each other without connecting means, *and wherein the polymer base comprises cross-linking agents,* **characterized in that**:
c. the sole and the support element are made from pre-forms which are pre-vulcanized.

7. Sole element according to claim 6, wherein the sole and the support element are made of standard-EVA.

8. Sole element according to claim 7, wherein said sole comprises a vinyl acetate content of 18 to 27%, fillers, peroxides, and co-agents like acrylate and isocyanate.

9. Sole element according to claim 7, wherein the support element comprises a vinyl acetate content of 18 to 25% and peroxides.

10. Sole element according to claim 6, wherein said support element comprises a hardness of Shore A 80 to 85.

11. Sole element according to claim 6, wherein the support element comprises a hardness of Shore D.

12. A shoe, particularly an athletic shoe, comprising:
a. an outsole, an insole and an upper;
b. a midsole with at least one support element, wherein said midsole and said support element are made from the same polymer base having different mechanical properties and being connected to each other without connecting means, *and wherein the polymer base comprises cross-linking agents,* **characterized in that:**
c. said midsole and said support element are made from pre-forms which are pre-vulcanized.

13. Shoe according to claim 12, wherein said midsole and said support element are made of standard-EVA.

14. Shoe according to claim 13, wherein said midsole comprises a vinyl acetate content of 18 to 27%, fillers, co-agents like acrylate and isocyanate, and peroxides.

15. Shoe according to claim 13, wherein the support element comprise a vinyl acetate content of 18 to 25% and peroxides.

16. Shoe according to claim 15, wherein said support element comprises a hardness of Shore A 80 to 95.

17. Shoe according to claim 15, wherein said support element comprises a hardness of Shore D.

## Patentansprüche

1. Ein Verfahren zur Herstellung eines Sohlenelements, insbesondere für Sportschuhe, welches die folgenden Schritte aufweit:
a. Herstellung einer Sohlen-Vorform und einer Vorform eines Unterstützungselements, wobei die Sohlen-Vorform und die Vorform des Unterstützungselements auf der gleichen Polymer-Basis hergestellt werden, die unterschiedliche mechanische Eigenschaften haben und keine Verbindungsmittel aufweisen und wobei die Polymer-Basis Vernetzungs-Wirkmittel umfasst;
b. Anordnen der Sohlen-Vorform und der Vorform des Unterstützungselements in einer Form; und
c. Verbinden der Sohlen-Vorform mit der Vorform des Unterstützungselements durch Anwendung von Wärme und Druck, ohne Verbindungsmittel hinzuzufügen, **dadurch gekennzeichnet, dass**
d. Die Sohlen-Vorform und die Vorform des Unterstützungselements sind vorvulkanisiert sind.

2. Verfahren gemäß Anspruch 1, wobei die Sohlen-Vorform und die Vorform des Unterstützungselements aus Standard-EVA hergestellt werden.

3. Verfahren gemäß Anspruch 2, wobei die Vorform des Unterstützungselements einen Anteil von Vinylacetat von 18 bis 25 % und Peroxide auf weist.

4. Verfahren gemäß Anspruch 2, wobei die Sohlen-Vorform einen Anteil von Vinylacetat von 18 bis 27 %, Füllstoffe, Peroxide und Mitwirkstoffe wie Acrylat und Isozyanat aufweist.

5. Verfahren gemäß Anspruch 4, wobei die Sohlen-Vorform einen Aufblaswirkstoff zum Aufschäumen der Sohlen-Vorform in einer Form umfasst.

6. Ein Sohlenelement, insbesondere für Sportschuhe, umfassend:
a. eine Sohle mit zumindest einem Unterstützungselement, wobei
b. die Sohle und das Unterstützungselement auf der gleichen Polymer-Basis hergestellt werden, die unterschiedliche mechanische Eigenschaften haben und miteinander ohne Verbindungsmittel verbunden werden und wobei die Polymer-Basis Vernetzungs-Wirkmittel umfasst, **dadurch gekennzeichnet, dass**
c. die Sohle und das Unterstützungselement aus Vorformen hergestellt werden, die vorvulkanisiert sind.

7. Sohlenelement gemäß Anspruch 6, wobei die Sohle und das Unterstützungselement aus Standard-EVA hergestellt werden.

8. Sohlenelement gemäß Anspruch 7, wobei die Sohle einen Anteil von Vinylacetat von 18 bis 27 %, Füllstoffe, Peroxide und Mitwirkstoffe wie Acrylat und Isozyanat aufweist.

9. Sohlenelement gemäß Anspruch 7, wobei das Sohlenelement einen Anteil von Vinylacetat von 18 bis 25 % und Peroxide aufweist.

10. Sohlenelement gemäß Anspruch 6, wobei das Unterstützungselement eine Härte von Shore A 80 bis 85 aufweist.

11. Sohlenelement gemäß Anspruch 6, wobei das Unterstützungselement eine Härte von Shore D aufweist.

12. Eine Schuh, insbesondere ein Sportschuh, aufweisend:
a. eine Laufsohle, eine Innensohle und einen Schaft;
b. eine Zwischensohle mit mindestens einem Unterstützungselement, wobei die Zwischensohle und das Unterstützungselement auf der gleichen Polymer-Basis hergestellt werden, die unterschiedliche mechanische Eigenschaften haben und miteinander ohne Verbindungsmittel verbunden werden und wobei die Polymer-Basis Vernetzungs-Wirkmittel umfasst, **dadurch gekennzeichnet, dass**
c. die Zwischensohle und das Unterstützungselement aus Vorformen hergestellt werden, die vorvulkanisiert sind.

13. Schuh gemäß Anspruch 12, wobei die Zwischensohle und das Unterstützungselement aus Standard-EVA hergestellt werden.

14. Schuh gemäß Anspruch 13, wobei die Zwischensohle einen Anteil von Vinylacetat von 18 bis 27 %, Füllstoffe, Peroxide und Mitwirkstoffe wie Acrylat und Isozyanat aufweist.

15. Schuh gemäß Anspruch 13, wobei das Unterstützungselement einen Anteil von Vinylacetat von 18 bis 25 % und Peroxide aufweist.

16. Schuh gemäß Anspruch 15, wobei das Unterstützungselement eine Härte von Shore A 80 bis 85 aufweist.

17. Schuh gemäß Anspruch 15, wobei das Unterstützungselement eine Härte von Shore D aufweist.

## Revendications

1. Procédé de fabrication d'un élément de semelle, particulièrement pour des chaussures de sport, comprenant les étapes suivantes :
a. fabrication d'une préforme de semelle et d'une préforme d'un élément de support, dans lesquelles ladite préforme de semelle et ladite préforme de l'élément de support sont fabriquées à partir de la même base de polymère ayant des propriétés mécaniques différentes et ne comprennent aucun moyen de liaison, *et dans lequel la base* de *polymère comprend des agents de réticulation ;*
b. positionnement de la préforme de semelle et de la préforme de l'élément de support dans un moule ; et
c. liaison de ladite préforme de semelle avec ladite préforme dudit élément de support sous l'application de chaleur et de pression sans ajouter de moyen de liaison, **caractérisé en ce que** :
d. la préforme de semelle et la préforme de l'élément de support sont prévulcanisées.

2. Procédé selon la revendication 1, dans lequel ladite préforme de semelle et ladite préforme de l'élément de support sont fabriquées en EVA standard.

3. Procédé selon la revendication 2, dans lequel ladite préforme de l'élément de support possède une teneur en acétate de vinyle de 18 à 25 % et des peroxydes.

4. Procédé selon la revendication 2, dans lequel la préforme de semelle possède une teneur en acétate de vinyle de 18 à 27 %, des agents de remplissage, des peroxydes et des co-agents comme de l'acrylate et de l'isocyanate.

5. Procédé selon la revendication 4, dans lequel la préforme de semelle comprend un agent de soufflage pour le moussage de ladite préforme de semelle dans un moule.

6. Élément de semelle, particulièrement pour des chaussures de sport, comprenant :
a. une semelle avec au moins un élément de support, dans laquelle
b. la semelle et l'élément de support sont fabriqués à partir de la même base de polymère ayant des propriétés mécaniques différentes et étant reliés l'un à l'autre sans moyen de liaison, *et dans lequel la base de polymère comprend des agents de réticulation,* **caractérisé en ce que** :
c. la semelle et l'élément de support sont fabriqués à partir de préformes qui sont prévulcanisées.

7. Élément de semelle selon la revendication 6, dans lequel la semelle et l'élément de support sont fabriqués en EVA standard.

8. Élément de semelle selon la revendication 7, dans lequel ladite semelle possède une teneur en acétate de vinyle de 18 à 27 %, des agents de remplissage, des peroxydes, et des co-agents comme de l'acrylate et de l'isocyanate.

9. Élément de semelle selon la revendication 7, dans lequel l'élément de support possède une teneur en acétate de vinyle de 18 à 25 % et des peroxydes.

10. Élément de semelle selon la revendication 6, dans lequel ledit élément de support possède une dureté de 80 à 85 Shore A.

11. Élément de semelle selon la revendication 6, dans lequel l'élément de support possède une dureté Shore D.

12. Chaussure, particulièrement une chaussure de sport, comprenant :
a. une semelle d'usure, une semelle intérieure et une tige ;
b. une semelle intermédiaire avec au moins un élément de support, dans laquelle ladite semelle intermédiaire et ledit élément de support sont fabriqués à partir de la même base de polymère ayant des propriétés mécaniques différentes et étant reliés l'un à l'autre sans moyen de liaison, *et dans laquelle la base de polymère comprend des agents de réticulation*, **caractérisée en ce que :**
c. ladite semelle intermédiaire et ledit élément de support sont fabriqués à partir de préformes qui sont prévulcanisées.

13. Chaussure selon la revendication 12, dans laquelle ladite semelle intermédiaire et ledit élément de support sont fabriqués en EVA standard.

14. Chaussure selon la revendication 13, dans laquelle ladite semelle intermédiaire possède une teneur en acétate de vinyle de 18 à 27 %, des agents de remplissage, des co-agents comme de l'acrylate et de l'isocyanate, et des peroxydes.

15. Chaussure selon la revendication 13, dans laquelle l'élément de support possède une teneur en acétate de vinyle de 18 à 25 % et des peroxydes.

16. Chaussure selon la revendication 15, dans laquelle ledit élément de support possède une dureté de 80 à 95 Shore A.

17. Chaussure selon la revendication 15, dans laquelle ledit élément de support possède une dureté Shore D.
